(19) **Europäisches Patentamt**
**European Patent Office**
**Office européen des brevets**

(11) **EP 2 128 591 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(51) Int Cl.:
*G01M 15/04* *(2006.01)*     *G01M 13/02* *(2019.01)*

(21) Anmeldenummer: **09160816.6**

(22) Anmeldetag: **20.05.2009**

(54) **Verfahren zur Überwachung von Leistungsprüfständen, sowie Leistungsprüfstand**

Method for monitoring power test beds and power test bed

Procédé de surveillance de bancs d'essai de puissance et banc d'essai de puissance

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **26.05.2008 AT 29908 U**

(43) Veröffentlichungstag der Anmeldung:
**02.12.2009 Patentblatt 2009/49**

(73) Patentinhaber: **AVL List GmbH**
**8020 Graz (AT)**

(72) Erfinder:
• **Pickl, Gerhard**
**8010, Graz (AT)**
• **Schmidt, Martin**
**63225, Langen (DE)**
• **Walcher, Martin**
**8062, Kumberg (AT)**
• **Kanya, Stefan**
**8200, Gleisdorf (AT)**

(74) Vertreter: **Patentanwälte Pinter & Weiss OG**
**Prinz-Eugen-Straße 70**
**1040 Wien (AT)**

(56) Entgegenhaltungen:
**EP-A1- 1 884 756      EP-A2- 0 358 167**
**EP-A2- 0 401 847**

• **U SHAKED ET AL: "MINIMUM VARIANCE CONTROL OF DISCRETE TIME MULTIVARIABLE ARMAX SYSTEMS", SIAM JOURNAL ON CONTROL AND OPTIMIZATION, Bd. 24, Nr. 3, 31. Dezember 1986 (1986-12-31), Seiten 396-411, XP055259541, DOI: 10.1137/0324023**
• **Robert C Rice ET AL: "Performance Monitoring Fundamentals: Demystifying Performance Assessment Techniques", , 19. Juli 2006 (2006-07-19), XP055259551, Gefunden im Internet: URL:http://web.archive.org/web/20060719043236/http://www.bin95.com/Performance Monitoring Fundamentals-2.pdf [gefunden am 2016-03-18]**
• **B.J. BUNKER ET AL: "Robust multivariable control of an engine-dynamometer system", IEEE TRANSACTIONS ON CONTROL SYSTEMS TECHNOLOGY., Bd. 5, Nr. 2, 1. März 1997 (1997-03-01), Seiten 189-199, XP055259570, US ISSN: 1063-6536, DOI: 10.1109/87.556024**

**Beschreibung**

Die Erfindung betrifft ein Verfahren zur Überwachung von Leistungsprüfständen mit zumindest einem Belastungsaggregat, das mit einem Prüfling, beispielsweise einem Verbrennungsmotor, Fahrzeugantrieb oder Antriebsstrang, gekoppelt ist, umfassend die Ermittlung von mehreren, allenfalls abgeleiteten, und den aktuellen Zustand des Prüfstandes charakterisierenden Parametern und deren automatisierte Bewertung im Hinblick auf die Stabilität des Betriebs-Zustandes des Prüfstandes, sowie einen Leistungsprüfstand mit zumindest einem Belastungsaggregat, das mit einem Prüfling, beispielsweise einem Verbrennungsmotor, Fahrzeugantrieb oder Antriebsstrang, koppelbar ist, mit weiters einer Prüfstandsregelung, vorzugsweise mit einer übergeordneten Prüfstandsautomatisierung, und einer Auswerteeinheit zur Ermittlung von mehreren, vorzugsweise abgeleiteten, und den aktuellen Zustand des Prüfstandes charakterisierenden Parametern und deren automatisierter Bewertung im Hinblick auf die Stabilität des Betriebs-Zustandes des Prüfstandes.

Eine Prüfstandskonfiguration, bestehend aus beispielsweise einem Verbrennungsmotor als Prüfling, der mit einem Belastungsaggregat gekoppelt ist, ist aufgrund ihres mechanischen Aufbaus prinzipiell schwingfähig, da es in jedem Fall zumindest einen torsionselastischen Abschnitt bzw. ein torsionselastisches Element aufweist. Dabei kann das Belastungsaggregat aus einer oder mehreren Belastungsmaschinen bestehen, die über Zwischengetriebe und/oder Summengetriebe in Serie oder parallel geschaltet arbeiten können. Als torsionselastisches Element wirkt beispielsweise eine Verbindungswelle - wie speziell bei Motorprüfständen - zwischen Belastungsaggregat und Prüfling, aber etwa auch eine Halbachse an einem Antriebsstrang, an welcher das Belastungsaggregat direkt angekoppelt sein kann. Allenfalls kann das torsionselastische Element auch innerhalb des Prüflings und/oder des Belastungsaggregates liegen. Auch ein Messflansch stellt prinzipiell ein torsionselastisches Element dar. Die mechanische Prüfstandskonfiguration kann daher durch ein Mehr-Massen-Feder-Dämpfer-System nachgebildet werden. Bei bestimmter Anregung kann dieser Aufbau instabil werden und eine mechanische Zerstörung einzelner Komponenten auslösen bzw. die Messungen verfälschen. Um einen sicheren, automatischen Betrieb zu ermöglichen, sind mögliche Instabilitäten frühzeitig zu erkennen, damit durch das Automatisierungssystem bzw. Regelungssystem des Prüfstandes Gegenmaßnahmen ausgelöst werden können. Doch auch bei manueller Bedienung durch unerfahrene Prüfstandsbetreiber ist es zur Gewährleistung der Betriebssicherheit erforderlich, auftretende Instabilitäten automatisch zu erkennen.

EP 0401847 A2 offenbart ein Regelungsverfahren für einen Leistungsprüfstand, wobei zur Erhöhung der Regelstabilität die Regelkreise von Motor und Dynamometer durch gemeinsame Regelgrößen miteinander verknüpft werden. Dabei werden gegenseitige Beeinträchtigungen von Regelgrößen (insb. der Öffnung des Drosselventils und Antriebsstrom des Dynamometers) verhindert, um eine stabile Regelung zu erzielen.

Der Fachartikel "Minimum Variance Control of Discrete Time Multivariable Armax Systems", U Shaked et al., Siam Journal on Control and Optimization, Bd. 24, Nr. 3, 31.12.1986, Seiten 396-411, offenbart eine abstrakte mathematische Analyse eines multivariablen linearen stochastischen Systems in einem ARMAX-Format. Es werden Lehrsätze für die Regelung entwickelt, um die Varianz des Output-Prozesses unter anderem die Systemstabilität zu gewährleisten.

In "Performance Monitoring Fundamentals: Demystifying Performance Assessment Techniques", Robert C Rice et al., 19. Juli 2016, wird eine Echtzeit-Überwachung von Regelungsvorgängen anhand von Kennzahlen offenbart. Als Kennzahlen zur Leistungsüberwachung werden ein Harris-Index, eine Standardabweichung und eine Varianz einer Untergruppe von Daten vorgeschlagen.

EP1884756A1 offenbart einen Motorprüfstand und ein Verfahren, mit denen der mechanische Verlust des Motors in einer kurzen Zeitspanne während der instationären Phase, bevor die Messdaten in einen stationären Zustand übergehen, ermittelt werden kann.

EP 0358167 A2 offenbart ein reaktionsschnelles und genaues Drehmoment-Regelungssystem für einen Motorprüfstand.

Der Artikel "Robust multivariable control of an engine-dynamometer system", B. J. Bunker et al., IEEE Transactions on Control System Technology, Bd. 5, Nr. 2, 1.3.1997, offenbart ein multivariables Reglerdesign eines nichtlinearen Motor-Dynamometer-Systems.

Die Aufgabe der vorliegenden Erfindung liegt daher darin, eine sichere Erkennung von Instabilitäten bei Leistungsprüfständen unterschiedlichster Konfigurationen in den dabei üblichen Regelarten sowie die zuverlässige Online-Überwachung der Stabilität der Regelkreise an Leistungsprüfständen in Echtzeit unter möglichst ressourcenschonendem CPU-Einsatz zu ermöglichen.

Zur Lösung dieser Aufgabe ist das Verfahren erfindungsgemäß dadurch gekennzeichnet, dass jeder Parameter normiert wird, wobei als Grundlage für die Normierung Kenngrößen der aktuellen Prüfstands-Konfiguration aus Prüfling und Belastungsaggregat herangezogen werden dass die normierten Parameter gewichtet und zu einer einzelnen, für den aktuellen Zustand charakteristischen Kennzahl zusammengefasst werden, und dass diese Kennzahl für die Anzeige bzw. als Steuergröße für die Echtzeit-Prüfstandssteuerung zur Verfügung gestellt wird. Damit ist bereits bei manuellem Betrieb eine einfach interpretierbare Größe für die Systemstabilität gegeben, indem beispielsweise eine definierte Stabilitäts-Kennzahl unabhängig der Prüfstandskonfiguration zwischen 0 für stabil und 100 für instabil zur Verfügung gestellt wird. Nachdem die Prüfstandskonfiguration und somit das Systemverhalten nicht genau bekannt und die Rechenmöglichkeiten beschränkt sind, werden ausschließlich signalgestützte Verfahren für die Überwachung eingesetzt. Daher werden als Parameter vorzugsweise vorhandene Mess- und Regelgrößen wie Motordrehzahl, Drehmoment, Pedalwertstellung (entspricht der Gaspedalstellung beim Fahrzeug) oder Bremsendrehzahl herangezogen. Dabei wird für die jeweilige Standard-Regel- bzw. -Testart ein optimaler Methodeneinsatz generiert. Aufgrund der Normierung ist in jeder Prüfstandkonfiguration eine sichere und einfache Erkennung auf gleichbleibender Basis gewährleistet. Anwendung kann diese erfindungsgemäße Lösung für prinzipiell beliebige Arten von Prüflingen finden, beispielsweise für einen Verbrennungsmotor, für Fahrzeugantriebe aller Art, einschließlich Elektromotoren und/oder Hybridantriebe, oder für Antriebsstränge.

Vorzugweise ist dabei vorgesehen, dass die Gewichtung der normierten Parameter abhängig vom Betriebsmodus des Prüfstandes durchgeführt wird. Dabei bestimmen Testart und Regelart den Betriebsmodus.

Eine einfache und dennoch rasch zu guten Stabilitätsaussagen führende Variante sieht vor, dass von erfassten Parametern des Prüfstands oder deren zeitlicher Ableitung die Standardabweichung über einen definierten Zeitraum bestimmt wird.

Vorteilhafterweise ist weiters vorgesehen, dass erfasste Parameter des Prüfstands auf definierte Frequenzbereiche eingeschränkt werden können.

Gemäß einer vorteilhaften Variante des Verfahrens wird nach dem Abtasten und vor der Ermittlung des jeweiligen Parameters ein Downsampling angewendet, wobei die resultierende Abtastung an den jeweils interessierenden Frequenzbereich angepasst ist.

Auf erfasste Parameter des Prüfstands kann gemäß einer weiteren vorteilhaften Variante eine Frequenzanalyse angewendet werden.

Gemäß einer weiteren Ausführungsform der Erfindung kann vorgesehen sein, dass aus erfassten Parametern des Prüfstandes eine Kennzahl über die in der Verbindungswelle umgesetzten Leistung ermittelt wird.

Betreffend der Auswahl der für die Stabilitätsüberwachung herangezogenen Parameter sind verschiedene Varianten denkbar, so etwa dass im Leerlaufmodus bzw. bei Vorgabe eines Drehmomentes des Belastungsaggregates ein Drehmomentsignal aufgenommen und ein charakteristischer Parameter aus einer Frequenzanalyse gewonnen wird.

Andererseits könnte auch vorgesehen sein, dass bei Vorgabe einer Drehzahl des Belastungsaggregates ein Drehmomentsignal aufgenommen und ein charakteristischer Parameter durch Bestimmung der Standardabweichung gewonnen wird.

Auch eine Variante ist möglich, bei der im Leerlaufmodus bzw. bei Vorgabe eines Drehmomentes des Belastungsaggregates die Drehzahl des Prüflings aufgenommen und ein charakteristischer Parameter durch Bestimmung der Standardabweichung gewonnen wird.

Weiters könnte vorgesehen sein, dass im Leerlauf oder bei Vorgabe eines Drehmomentes des Belastungsaggregates in stationären Arbeitspunkten die Drehzahl des Belastungsaggregates aufgenommen und ein charakteristischer Parameter durch Bestimmung der Standardabweichung gewonnen wird.

Eine andere Variante sieht vor, dass bei Vorgabe einer Drehzahl des Belastungsaggregates ein charakteristischer Parameter aus einer Frequenzanalyse dieser Drehzahl gewonnen wird.

In allen stationären Arbeitspunkten können gemäß einer weiteren Ausführungsform die Stellgrößen für das Belastungsaggregat und/oder den Prüfling überwacht werden und wird daraus ein charakteristischer Parameter durch Bestimmung der Standardabweichung gewonnen.

Vorteilhafterweise ist vorgesehen, dass zur Normierung des Drehmoment-Analyseergebnisses eine Drehmoment - Kenngröße des Belastungsaggregates verwendet wird.

Andererseits kann vorgesehen sein, dass zur Normierung des Drehzahl-Analyseergebnisses des Belastungsaggregates eine Drehzahl - Kenngröße des Belastungsaggregates verwendet wird.

Zur Normierung des Analyseergebnisses der Drehzahl des Prüflings wird vorteilhafterweise eine Drehzahl - Kenngröße des Prüflings verwendet.

Hingegen ist es zweckmäßig, wenn zur Normierung des Stellgrößen-Analyseergebnisses des Belastungsaggregates eine Kenngröße des Belastungsaggregates verwendet wird.

Gemäß einer weiteren Erfindungsvariante kann vorgesehen, sein dass die Winkelbeschleunigung des Belastungsaggregates ermittelt und deren Standardabweichung als charakteristischer Parameter gewonnen wird.

Dabei ist es vorteilhaft, wenn zur Normierung der Standardabweichung der Winkelbeschleunigung physikalische Kenngrößen des Belastungsaggregates verwendet werden.

Weiters kann eine Ausführungsform des Verfahrens vorgesehen sein, gemäß welcher die in der Verbindungswelle umgesetzte Leistung als charakteristischer Parameter gewonnen wird.

Eine vorteilhafte Ausführungsform sieht vor, dass zur Normierung der in der Verbindungswelle umgesetzten Leistung eine Kenngröße des Belastungsaggregates verwendet wird.

Für alle der oben genannten Varianten kann es zweckmäßig sein, wenn alle für das Verfahren benötigten Kenngrößen des Prüfstandes bzw. des Prüflings aus den bei der Parametrierung des Prüfstandes in der Prüfstandsregelung bzw. der Prüfstandsautomation vorgegeben Werten entnommen werden. Damit kann für jede Prüfstandskonfiguration automatisch und ohne zusätzlichen Parametrierungsaufwand die einfache und sichere Erkennung von Instabilitäten gewährleistet werden.

Vorteilhafterweise ist weiters vorgesehen, dass die Kennzahl der Prüfstandsregelung zur Verfügung gestellt wird und in Abhängigkeit von dieser Kennzahl automatisch eine vordefinierte Reaktion ausgelöst wird. Über die automatisch konfigurierbare Reaktion des übergeordneten Automatisierungssystem durch entsprechende, vom Prüfstandsbetreiber zu definierende Aktionen, wie z.B. Motor-Stopp, Kaltlauf- oder Leerlauf-Betrieb, auf die Stabilitäts-Kennzahl kann das Prüfstandssystem sicher vor Beschädigungen geschützt werden. Dabei kann die Übertragung der Kennzahl wahlweise über einen Analogwert wie Spannung, Stromstärke, Frequenz od. dgl. übertragen werden, oder als Digitalwert. Auch kann eine direkte Verbindung der die Kennzahl ermittelnden Einheit mit dem Automatisierungssystem oder der Prüfstandsregelung vorgesehen sein, genauso wie allenfalls ein Bussystem, an dem beide Komponenten angeschlossen sind.

Zur Lösung der eingangs gestellten Aufgabe ist ein Leistungsprüfstand erfindungsgemäß dadurch gekennzeichnet, dass in der Prüfstandsregelung, vorzugsweise in der Prüfstandsautomatisierung, ein Modul implementiert ist, in dem nach einem Verfahren gemäß einem der vorhergehenden Absätze jeder Parameter normiert, die normierten Parameter gewichtet und zu einer für den aktuellen Zustand charakteristischen Kennzahl zusammengefasst wird, welche für die Anzeige bzw. als Steuergröße für die Echtzeit-Prüfstandssteuerung zur Verfügung steht. Das besagte Modul kann als Software oder Hardware, allenfalls auch in Analogtechnik, realisiert sein.

Vorteilhafterweise ist dabei eine Anzeige für die Kennzahl vorgesehen.

In der nachfolgenden Beschreibung wird die Erfindung anhand bevorzugter Ausführungsbeispiele näher erläutert.

Dabei zeigt die Fig. 1 ein Zustandsdiagramm zur Auswertung der aktuellen Regelart, Fig. 2 zeigt das Zustandsdiagramm für die Überwachung bei Leerlauf, Fig. 3 zeigt das Zustandsdiagramm für die Überwachung der weiteren Regelarten, Fig. 4 und Fig. 5 stellen das Prinzip der Triggerung der Methoden bei stationärem bzw. bei transientem Prüfstandsbetrieb (Rampen) dar, Fig. 6 ist eine Darstellung des S-Function-Blockes zum Steuern der Methoden, Fig. 7 zeigt die Parameter für diesen S-Function-Block, Fig. 8 ist eine Darstellung des Konzeptes zur Bildung der Stabilitäts-Kennzahl, Fig. 9 zeigt beispielhaft einen Normierungsvorgang am Beispiel der max. Motordrehzahl, Fig. 10 ist eine Darstellung eines Software-Modells zur Normierung der BP-STD Ausgangsgröße, und Fig. 11 ist eine gleichartige Darstellung des Software-Modells zur Normierung der DynoAcc-Methode.

Der grundsätzliche Lösungsansatz für die Überwachung besteht darin, dass die relevanten Prüfstandsgrößen ausgewertet und dass Methoden entsprechend der Regel- bzw. Testart zur Analyse angewendet werden. Anschließend erfolgt die Normierung der Analyseergebnisse und die Rückgabe der Kennzahl - mit Auskunft über die Systemstabilität - an die Prüfstandsautomatisierung. Dabei sind zusätzliche Funktionalitäten wie Berechnung beispielsweise von Signalgradient, Verbrennungsfrequenz usw., aber auch Signallenkung (Routing), Datenaufbereitungsmaßnahmen und Setzen von Modellparametern notwendig. In jedem Fall wird der Einsatz der einzelnen Methoden entsprechend der Regelart bzw. Testart des Prüflings gesteuert und werden die Signale für die Analyse der Regelgrößen entsprechend gelenkt. Als Grundlage für die Normierung werden Kenngrößen des Prüflings und des Belastungsaggregates herangezogen und die Stabilitätskennzahl dementsprechend generiert. Bei stationärem Prüfstandsbetrieb ist es erwünscht, dass die Stabilitäts-Kennzahl sensibler auf auftretende Instabilitäten reagieren soll, weshalb hier ausschließlich für diese Testart geeignete Methoden angewendet werden.

Die nachfolgende Tabelle 1 führt die vorzugsweise zur Anwendung gelangenden Methoden an:

Tabelle 1

| Methode | Beschreibung | Einsatz möglichkeit |
|---|---|---|
| STD | Berechnung der Standardabweichung (Mittelwertzeit 1s) | Stationär-Tests |
| TP-STD | Tiefpassfilterung der STD-Eingangsgröße (Mittelwertzeit 2s) | Stationär-Tests |
| BP-STD | Bandpassfilterung der STD-Eingangsgröße (Mittelwertzeit 0,24s) | Stationär und Rampen |
| DynoAcc | STD der Bremsenbeschleunigung | Stationär und Rampen |
| BP-FFT | Bandpassfilterung der FFT-Eingangsgröße | Stationär und Rampen |
| Wellenverlust berechnung | mit TP (Fg = 0.3Hz) | Stationär und Rampen |

Bevor auf die eigentliche Steuerung der Methoden eingegangen wird, werden zuerst die Prüfstandsgrößen bzw. Parameter definiert, auf die die Methoden angewendet werden. Während bei der Wellenverlustberechnung und Auswertung der Bremsenbeschleunigung durch ihre Definition vorgegeben ist, welche Größen zur Auswertung benötigt werden, können die Eingangsgrößen der STD-Methoden und der FFT-Methode aus Tabelle 1 grundsätzlich frei gewählt werden. Vorzugsweise werden die relevanten Regelgrößen des Motorprüfstandsystems, nämlich Drehmoment (MD), Motordrehzahl (N-Eng) und Bremsendrehzahl (N-Dyn) zur Überwachung der Prüfstandsstabilität mithilfe der STD- und FFT-Methode verwendet.

Um die sensiblere Stabilitätsbewertung bei stationärem Prüfstandsbetrieb zu erhalten, werden zusätzlich die Stellgröße des Motorreglers (Y-Eng - Pedalwert) und jene des Bremsenreglers (Y-Dyn - abhängig vom Bremsentyp) bei dieser Testart ausgewertet.

Welche Methode (FFT oder STD) schließlich auf die genannten Prüfstandsgrößen bzw. Parameter angewendet wird ist wiederum abhängig von der betriebenen Regelart. Bevorzugte Auswahlen sind in der nachfolgenden Tabelle 2 aufgeführt. Dabei wird immer darauf geachtet, dass zumindest das Drehmomentsignal und ein Drehzahlsignal (Motor oder Belastungsaggregat) bei aktivierter Echtzeitüberwachung auf mögliche Instabilitäten ausgewertet werden. (Die mit Stern * gekennzeichneten Größen nur bei stationärem Prüfstandsbetrieb).

Tabelle 2

| Regelart | Überwachte Prüfstandsgrößen | | | | |
| --- | --- | --- | --- | --- | --- |
| | MD | N-Eng | N-Dyn | Y-Eng | Y-Dyn |
| Leerlauf | BP-FFT | BP-STD | TP-STD* | STD* | STD* |
| N/Alpha n/MD n/x | BP-STDu. TP-STD* | - | BP-FFT | STD* | STD* |
| Md/Alpha Md/n Md/x | BP-FFT | BP-STD | TP-STD* | STD* | STD* |

Wie Tabelle 2 zeigt, wird die FFT-Methode (BP-FFT) immer auf die aktuelle Regelgröße des Bremsenreglers - die der Regelart entsprechenden Regelgrößen sind in der folgenden Tabelle 3 angegeben - angewendet.

Tabelle 3

| Regelart | Belastungsaggregat | Prüfling |
| --- | --- | --- |
| Leerlauf | - | Leerlaufposition |
| n/Alpha | Drehzahl | Drossel klappen position (Pedalwert) |
| Md/Alpha | Drehmoment | Drosselklappenposition (Pedalwert) |
| n/Md | Drehzahl | Drehmoment |
| Md/n | Drehmoment | Drehzahl |
| n/x | Drehzahl | beliebige Variable |
| Md/x | Drehmoment | beliebige Variable |

Die STD-Methode mit vorgeschaltetem Bandpassfilter wertet dabei immer die entgegengesetzte Prüfstandsgröße aus, d.h. bei Bremsendrehzahl-Regelung das Drehmoment und bei Drehmomentregelung durch den Bremsenregler die Motordrehzahl. So wird die Eigenschaft, dass bei jeder überwachten Testart (stationären und transienten Tests) zumindest das Drehmoment- und ein Drehzahlsignal ausgewertet werden, erreicht.

Die FFT-Methode beschränkt sich deswegen auf die Regelgrößen der Bremsenregelung, weil das Belastungsaggregat kritische Schwingungen mit höherer Frequenz (auch über der Leerlauf-Verbrennungsfrequenz) in das Prüfstandssystem einbringen kann und diese nicht, im Gegensatz zum BP-Filter der STD-Methode, durch die Filterung bei der FFT-Methode gedämpft werden.

Für die sensiblere Auswertung im stationären Prüfstandsbetrieb erfolgt zusätzlich die Anwendung der TP-STD-Methode entsprechend der Tabelle 2 und die Auswertung der Stellgrößen mithilfe der Standard-STD-Methode. Bei stationären Tests würde z.B. bereits eine schwankende Pedalwertvorgabe (Y-Eng) an den Prüfling ein unerwünschtes Verhalten bedeuten, auch wenn diese Stellgrößenänderungen nicht im Drehzahl- und Drehmomentverlauf erkennbar wären.

Die Steuerung der eingesetzten Methoden erfolgt anhand von zwei Hauptkriterien. Diese entscheiden grundsätzlich, in welchem Zustand sich die Online-Überwachung befindet. Zum einen wird durch die aktuell verwendete Regelart bestimmt, ob die Überwachung aktiv ist oder nicht, da Regelarten, die nicht den Standard-Regelarten der vorhergehenden Tabelle 3 entsprechen, wie z.B. Start, Stopp, Straßensteigung/Pedalwert usw. nicht überwacht werden.

Zum anderen wird durch die Sollwertsteigungen der Prüfstands-Regler (Bremse und Motor) die aktuelle Testart bestimmt. Sind die Gradienten der beiden Sollwerte Null, so wird der Prüfstand stationär betrieben und alle Methoden aus der Tabelle 2 werden angewendet.

Ist jedoch einer dieser Größen ungleich Null, so wird aufgrund des Steigungswertes entschieden, ob es sich um einen transienten oder einen dynamischen Betrieb handelt. Ist er unterhalb einer definierten Grenze (z.B. Drehzahlsteigung kleiner $\pm 500 \text{min}^{-1}/\text{s}$), so herrscht transienter Betrieb und es werden die Methoden angewendet, die ausschließlich bei Rampen funktionieren. Oberhalb der Grenze (dynamischer Betrieb) werden die Methoden ausgeschaltet, d.h. keine Stabilitäts-Überwachung der Prüfstandsregelung vorgenommen.

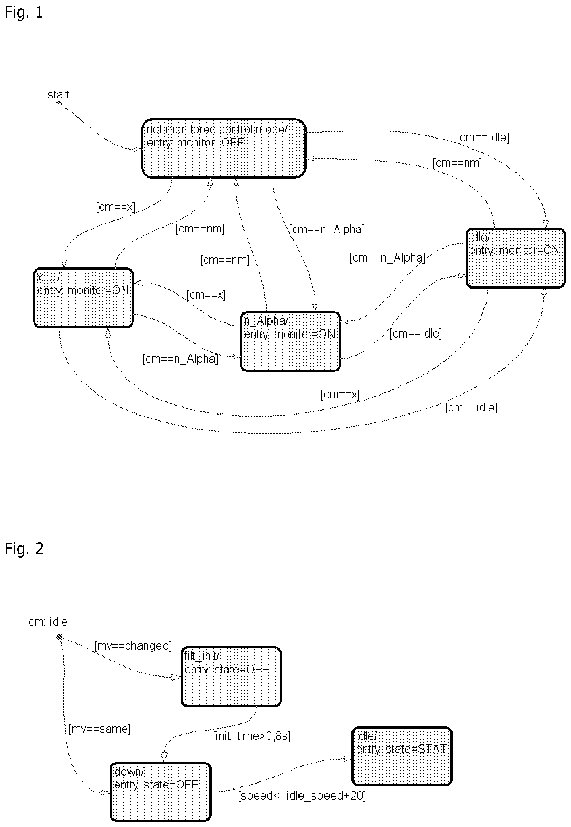

Um die Abhandlung der Methoden-Steuerung zu verdeutlichen, erfolgt eine weitere Beschreibung anhand von Zustandsdiagrammen, die in den Fig. 1 bis 3 dargestellt sind, und bei denen auch schon auf die spezielle Auswertung der entsprechenden Regelart eingegangen wird.

In Fig. 1 ist mittels des dargestellten Zustandsdiagramms die Auswertung der aktuellen Regelart (control mode: cm) beschrieben. Startpunkt ist immer der Startvorgang des Verbrennungsmotors, da dieser in einer nicht überwachten Regelart (not monitored: nm) erfolgt. Danach wird zwischen den einzelnen Standard-Regelarten und im Allgemeinen den nicht überwachten Regelarten unterschieden. In Fig. 1 sind nur die Regelarten Leerlauf und n/Alpha explizit dargestellt, alle weiteren überwachten Regelarten aus Tabelle 3 werden durch ein x angedeutet. Bevor die Methoden bei eingeschalteter Überwachung angesteuert werden können, erfolgt die Zuordnung der zu überwachenden Prüfstandsgrößen bzw. Parameter entsprechend der Tabelle 2 auf die Methoden BP-FFT, BP-STD und TP-STD. Bei allen anderen Methoden sind die Größen fix zugeordnet.

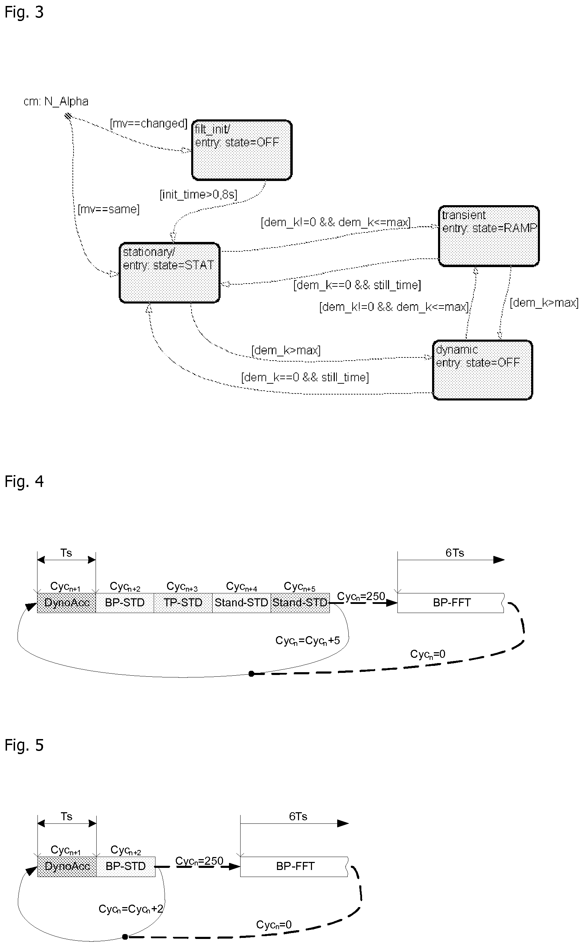

Bei eingeschalteter Online-Überwachung erfolgt die weitere Auswertung der aktiven Regelart, wobei bei der prinzipiellen Durchführung zwischen der Regelart Leerlauf und den restlichen Regelarten differenziert wird (siehe Fig. 2 und Fig. 3).

Werden die den Methoden nicht fix zugeordneten Überwachungsgrößen bzw. Parameter bei einem Regelartwechsel umgeschaltet, so werden auch die entsprechenden Filter mit anderen Eingangssignalen belegt. Das bedeutet, dass die Filter der BP-FFT-, BP-STD- und TP-STD-Methode aufgrund der Gruppenlaufzeit initialisiert werden müssen. Abhängig vom Filter mit der längsten Initialisierungszeit werden alle Methoden bei diesem Vorgang (filt_init) ausgeschaltet (siehe wieder Fig. 2 und Fig. 3).

Fig. 2 zeigt, dass beim Wechsel zur Regelart Leerlauf zuerst überprüft wird, ob sich die Überwachungsgrößen bzw. Parameter gegenüber der zuvor verwendeten Regelart geändert haben. Ist das nicht der Fall, wird gleich zum Zustand Motorauslauf (down) gewechselt und keine Filter-Initialisierung (filt_init) abgewartet. In diesem Zustand läuft der Verbrennungsmotor vom aktuellen Betriebspunkt (z.B. $3500 \text{min}^{-1}$ und 60% Pedalwert) zum Leerlaufpunkt aus. Nachdem das Prüflings-Verhalten bei Motorauslauf undefiniert ist, wird die Überwachung erst aktiviert, wenn die aktuelle Drehzahl annähernd die Leerlaufdrehzahl erreicht hat. Dieser Zustand (idle) kann nur durch einen Regelartwechsel wieder verlassen werden.

Der in Fig. 3 abgebildete Fall zeigt jene Zustände, die bei den weiteren Regelarten aus Tabelle 3 erreicht werden können. Wie schon beim Leerlauf-Betrieb beschrieben erfolgt zuerst die Entscheidung, ob eine Filterinitialisierung notwendig ist oder nicht. Danach wechseln die Zustände je nach Sollwertsteigung zwischen stationär, transient und dynamisch, und die Methoden werden entsprechend Tabelle 1 und Tabelle 2 eingesetzt.

Nach einer Sollwertänderung - d.h. wenn die Steigungen der Sollgröße (dem_k) des Bremsen- und des Motorreglers wieder Null sind - wird eine vordefinierte Zeit (still_time) abgewartet, bis wieder alle Methoden eingeschaltet werden. Diese Zeit ist in der praktischen Anwendung abhängig von der Prüfstandskonfiguration und der Regelgüte. Um aber die in der Aufgabenstellung geforderte Online-Überwachung unabhängig der Konfiguration zu ermöglichen, wird diese Wartezeit mit einem allgemein gültigen Wert von 1,5s definiert.

Diese Zeit sowie die Grenzen für die einzelnen Sollwertsteigungen werden jedoch autorisierten Prüfstandsbetreibern zugänglich gemacht und können zur Laufzeit des Verfahrens in einem definierten Bereich verändert werden. Die voreingestellten Grenzwerte für die diversen Sollwertsteigungen betragen für die Drehzahlvorgaben $500 \text{min}^{-1}/\text{s}$, für das Drehmoment 100Nm/s, für die Pedalwertvorgabe 10%/s und für die freie Größe x 100/s.

Aus den Fig. 2 und 3 ergeben sich nun die Zustände beim Prüfstandsbetrieb mit einer überwachten Regelart. Entsprechend des aktuellen Zustands werden die Methoden gesteuert. Dabei wird grundsätzlich zwischen zwei Steuersignalen unterschieden. Beim Steuersignal EIN (Enable) werden die Methoden aktiviert und z.B. die Eingangsdaten der STD-Methoden in die Datenbuffer zur Mittelwertbildung geschrieben. Mit Ausnahme der Wellenverlustberechnung (durch die niedrige Rechenzeit) liefern die einzelnen Methoden dabei noch keine Ausgangsgröße. Erst durch das zweite Steuersignal (Trigger) werden die restlichen Methoden berechnet. Das hat den Vorteil, dass die Rechenzeit in einem Modell-Zyklus durch eine mögliche, sequentielle Ansteuerung der Berechnungen verringert und somit definiert werden kann und sich nicht willkürlich ergibt.

In den Fig. 4 und 5 ist die Triggerung der Methoden bei stationärem bzw. bei transientem Prüfstandsbetrieb (Rampen) dargestellt, wobei hervorgeht, dass die Berechnungen (bis auf die Wellenverlust-berechnung) sequentiell angestoßen werden. Die BP-FFT-Methode wird allerdings nur alle 250 Zyklen (0,5 s) berechnet und dabei vorzugsweise, aus Gründen der Rechenleistung, auf jeweils 6 Zyklen aufgeteilt.

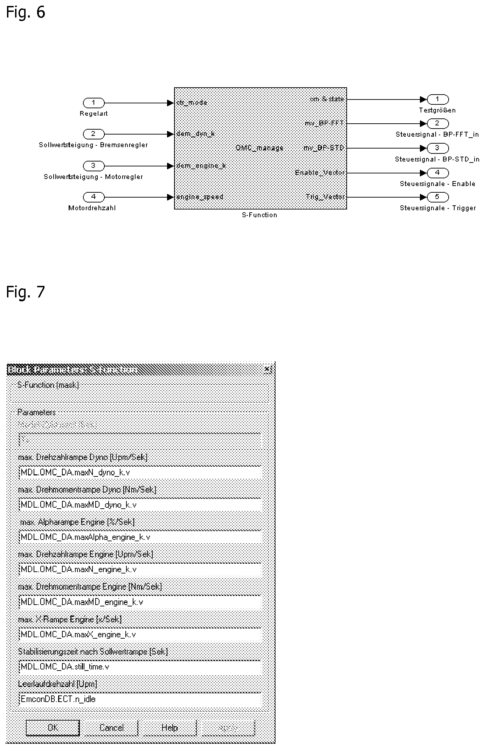

Die Umsetzung der beschriebenen Funktionen erfolgt über eine Software-Funktion (S-Function (OMC_manage)), welche die komplette Steuerung der Methoden anhand der vorhin definierten Eingangsgrößen übernimmt. Der realisierte S-Function-Block sowie die notwendigen Ein-, Ausgangsgrößen und Parameter sind in den Fig. 6 und 7 dargestellt. Die in Fig. 7 dargestellten Parameter können, mit Ausnahme der Leerlaufdrehzahl (die entsprechend der Prüfstandsparametrierung automatisch eingelesen wird), allenfalls auch zur Laufzeit der Echtzeit-Applikation von einem autorisierten Prüfstandsbetreiber verändert werden.

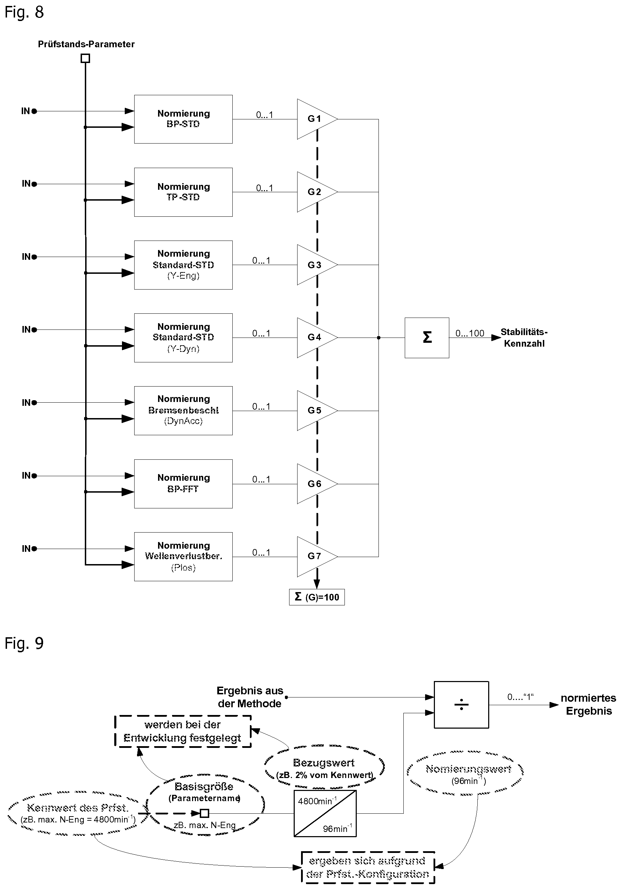

Zur Bildung der Online Stabilitäts-Kennzahl werden zuerst die Einzelergebnisse der Methoden normiert, danach gewichtet und schließlich als Summe dem Prüfstandssystem als Stabilitäts-Kennzahl vorzugsweise in Form einer System-Variablen zur Verfügung gestellt. Das Konzept dazu ist in der Fig. 8 dargestellt. Wie hier dargestellt erfolgt die Normierung der einzelnen Ergebnisse aus den Methoden anhand von Prüfstands-Parametern (Basisgrößen der Normierung). Bei der Entwicklung werden nur die Parameternamen (diese sind bei vielen Prüfständen gleich) fixiert und nicht die dahinter stehenden Werte. Diese ergeben sich erst bei der Anwendung am jeweiligen Motorprüfstand durch die Kennwerte der Prüfstandskonfiguration und werden automatisch eingelesen. Dadurch ergeben sich je nach Prüfstandskonfiguration unterschiedliche Werte als Basis der Normierung, wodurch keine zusätzliche Parametrierung bei unterschiedlichen Motorprüfständen bzw. Konfigurationen notwendig wird (siehe dazu Fig. 9).

Durch die Normierung der einzelnen Methoden-Ergebnisse von 0 bis 1 und die anschließende Gewichtung - die Summe der Gewichtung ergibt 100 - wird ein Wertebereich der Kennzahl von 0 für stabil bis 100 für instabil erreicht. Es wird keine Begrenzung vorgenommen, da der Wert 100 den Maximalwert laut Definition der einzelnen Normierungen darstellt und nicht die maximal mögliche Instabilität angibt. Außerdem lässt sich aus dem Konzept erkennen, dass jene Methoden, die ausschließlich im stationären Betrieb angewendet werden, die Stabilitäts-Kennzahl bei transienten Testarten um ihren gewichteten Anteil (siehe dazu die Tabelle 4) vermindern.

Tabelle 4

| Methoden | Gewichtung | Bemerkung |
|---|---|---|
| BP-STD | 15% | Vor allem im Resonanzbereich |
| TP-STD | 15% | Instabilitäten mit geringer Frequenz |
| STD (Y-Eng) | 8% | Zur sensibleren Auswertung bei stat. Betrieb |
| STD (Y-Eng) | 7% | Zur sensibleren Auswertung bei stat. Betrieb |
| Bremsenbeschl. (Dy noAcc) | 20% | Vor allem bei systemkritischen Zuständen |
| BP-FFT | 20% | Erkennt Schwingungen im gesamten Frequenzbereich (1 - 60Hz) |
| Wellenverluste (Plos) | 15% | Bei Torsion der Wellenverbindung |

Das wird einerseits gewünscht (sensiblere Auswertung im stationären Betrieb), macht aber einen Vergleich der Stabilitäts-Kennzahl bei den unterschiedlichen Testarten (stationär und transient) nicht möglich.

Die für die Normierung verwendeten Bezugswerte der einzelnen Basisgrößen haben sich großteils aus der praktischen Prüfstandsanwendung, Bewertung vergangener Messdaten bei instabilem Betrieb und entsprechenden Erfahrungsberichten ergeben. Der Vorgang der Normierung wird anhand Fig. 9 nochmals verdeutlicht. Wie hier hervorgeht, erhält man ein Ausgangssignal von eins, wenn das Eingangssignal dem Normierungswert entspricht. Liegt das Ergebnis der entsprechenden Methode über dem Normierungswert, wird das Ausgangssignal größer eins und liegt über dem für diese Methode definierten Maximalwert. Dadurch kann die Stabilitäts-Kennziffer den Wert 100 überschreiten.

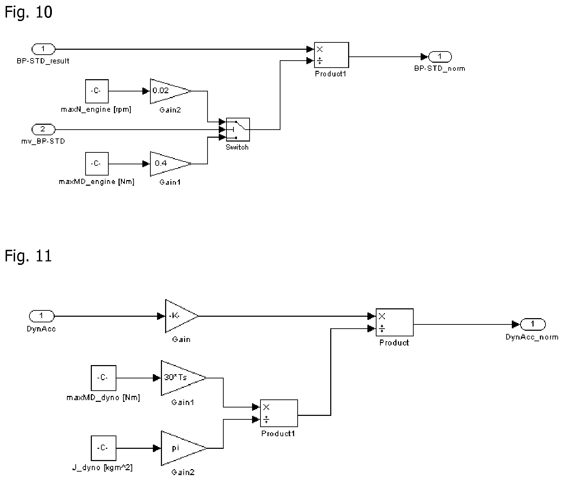

Die Normierung des Ergebnisses aus der Berechnung der Standardabweichung der bandpassgefilterten Eingangsgröße erfolgt je nach Regelart auf die maximale Drehzahl bzw. auf das maximale Drehmoment des Prüflings. Die nachfolgende Tabelle 5 zeigt die dafür angewendeten Bezugswerte, während das zugehörige Software-Modell in Fig. 10 Dargestellt ist.

Tabelle 5

| Basisgröße | Bezugswert | Bemerkung |
|---|---|---|
| Max. Motordrehzahl | 2% | Bei den Regelarten: Leerlauf, Md/Alpha, Md/n und Md/x |
| max. Motordrehmo ment | 40% | Bei den Regelarten: n/Alpha, n/Md und n/x |

Die Normierung der Ausgangsgröße der TP-STD-Methode erfolgt je nach Regelart entweder auf die maximale Drehzahl oder das maximale Drehmoment des Belastungsaggregates. In der folgenden Tabelle 6 sind die dafür angewendeten Basisgrößen und Bezugswerte dargestellt.

Tabelle 6

| Basisgröße | Bezugswert | Bemerkung |
|---|---|---|
| max. Bremsendrehzahl | 1% | Bei den Regelarten: Leerlauf, Md/Alpha, Md/n und Md/x |
| max. Bremsendreh moment | 20% | Bei den Regelarten: n/Alpha, n/Md und n/x |

Die Bezugswerte aus der Tabelle 6 weisen gegenüber jenen aus der Tabelle 5 nur den halben Wert auf. Das liegt daran, dass die Kenngrößen des Belastungsaggregates in der Regel deutlich über denen des Prüflings liegen. Außerdem wird die TP-STD-Methode nur bei stationären Tests angewendet und soll daher empfindlicher auf Instabilitäten reagieren. Das Software-Modell für die Normierung der TP-STD Ausgangsgröße entspricht prinzipiell jenem der Fig. 10 und wird daher nicht explizit dargestellt.

Die STD-Methode wird zweimal eingesetzt und zwar jeweils auf die Stellgröße des Bremsen- und -Motorreglers. Die Ergebnisse dieser Methode ermöglichen eine sensiblere Stabilitätsbewertung bei stationärem Prüfstandsbetrieb. Die Normierung der Ausgangswerte erfolgt entsprechend der beiden bisher dargestellten Methoden, wobei nur jeweils eine Basisgröße verwendet wird, da die Stellgrößen in jeder Regelart gleich sind.

Für die Normierung der STD-Methode (Y-Eng) wird als Bezugswert 50% der maximalen Stellgröße Motor verwendet, wobei diese Stellgröße des Motors der Pedalwertvorgabe entspricht. Im Fall der Normierung der STD-Methode (Y-Dyno) hingegen wird zwischen passiver und aktiver Bremse unterschieden. Als Bezugswert wird hier, ausgehend von der maximalen Stellgröße bei passiver Bremse 50% und bei aktiver Bremse 100% gewählt, da die Stellgröße positive wie auch negative Werte annehmen kann. Durch diese Bezugswerte können die normierten Ausgangsgrößen dieser Methode praktisch nicht größer als eins werden. Aktive Belastungsaggregate können im gesamten Stellbereich positive wie auch negative Stellwerte ausgeben, daher wird die Bezugsgröße bei diesen Aggregaten mit 100% der maximalen Stellgröße definiert.

Die Normierung der Methode zur Bewertung der Drehzahlbeschleunigung des Belastungsaggregates (Dyno-Acc) erfolgt nicht auf Basis eines Prozentwertes bezogen auf einen Kennwert, sondern ergibt sich aus der maximal möglichen Beschleunigung vorgegeben durch die Trägheit und den maximalen Drehmoment des Belastungsaggregates. Aus der Definition

$$M = J\alpha$$

M.........   Drehmoment [Nm]
J............   Trägheitsmoment [Nms$^2$]
α.........   Winkelbeschleunigung [s$^{-2}$]

folgt durch entsprechende Umwandlung für die maximale Drehzahlsteigung in [min$^{-1}$] pro Abtastintervall $T_s$:

$$\frac{\Delta n_{max}}{T_s} = \frac{30}{\pi} \frac{M_{Dyn_{max}}}{J_{Dyn}} T_s$$

Diese Normierungsmethode berücksichtigt nicht den angekoppelten Prüfling sondern bezieht sich ausschließlich auf die Größen des Belastungsaggregates. Das dazugehörige Software-Modell ist in Fig. 11 dargestellt.

Die DynoAcc-Methode liefert die Standardabweichung der Beschleunigung pro Modellzyklus. Durch die Korrektur des Eingangswertes mit dem Faktor $\sqrt{2}$ - konstante, wechselnde Beschleunigungen bei instabilem Prüfstandsbetrieb entsprechen in der Regel annähernd einer Sinusform - kann auf den maximalen Beschleunigungswert geschlossen werden. Dadurch wird der normierte Ausgangswert bei maximal möglicher Drehzahlbeschleunigung des Belastungsaggregates in etwa auf den Wert eins beschränkt.

Als Bezugsgröße für die Normierung der bandpaßgefilterten Fouriertransformations-Methode wird entsprechend der aktuellen Regelgröße des Bremsenreglers die maximale Drehzahl oder das maximal mögliche Drehmoment des Belastungsaggregates verwendet. Die aus den Versuchen resultierenden Bezugswerte sind in der nachstehenden Tabelle 7 angegeben.

Tabelle 7

| Basisgröße | Bezugswert | Bemerkung |
|---|---|---|
| max. Bremsendrehzahl | 1% | Bei den Regelarten: n/Alpha, n/Md und n/x |
| max. Bremsendreh moment | 33% | Bei den Regelarten: Leerlauf, Md/Alpha, Md/n und Md/x |

Für die Normierung des Ausgangswertes (Betragsgröße) der Methode zur Berechnung der Wellenverluste wird als Basisgröße die Nennleistung der am Motorprüfstand installierten Belastungsaggregates verwendet, da als Kenngröße der Wellenverbindung nur das Trägheitsmoment bekannt ist. Aufgrund der unterschiedlichen Ausführungsarten kann nicht allgemein auf die maximale Wellenverlustleistung der jeweiligen Welle geschlossen werden. Die Auswertungen von Prüfstandsdaten haben aber empirisch gezeigt, dass ein Bezugswert von 0,1% der Nennleistung des Belastungsaggregates in der praktischen Anwendung vernünftige Ergebnisse bringt.

Die Gewichtung der normierten Größen in Prozent ist wesentlich für die Bildung der Stabilitäts-Kennzahl. Sie ergibt sich aus der Bewertung der einzelnen Methoden zur Überwachung der Prüfstandsstabilität. Dabei wird unter anderem berücksichtigt, dass Methoden die eindeutiger kritische Instabilitäten erkennen können (z.B. Wellenverlustberechnung oder Bewertung der Drehzahlbeschleunigung) stärker gewichtet werden als Methoden die ausschließlich bei stationärem Prüfstandsbetrieb angewendet werden. Die aus der praktischen Anwendung der Methoden resultierenden Werte für die Gewichtung sind bereits in der Tabelle 4 angegeben worden.

Im Gesamtmodell werden nun die bislang erläuterten Kernfunktionen zusammengeführt, wobei die Tabelle 8 einen Überblick darüber gibt, wie viele Größen zur Bildung der Stabilitäts-Kennzahl beitragen.

Die in der Tabelle 8 aufgelisteten MPE-Parameter können gegebenenfalls durch einen autorisierten Prüfstandsbetreiber verändert werden. Die in den Klammern stehenden Werte werden standardmäßig verwendet.

Durch die Normierung der Methoden auf die jeweiligen Kenngrößen der aktuellen Prüfstands-Konfiguration kann auf eine zusätzlich notwendige Parametrierung verzichtet werden. Einzelne, einfache Parameter für die Steuerung und Auswertung der Methoden können jedoch durch einen autorisierten Prüfstandsbetreiber zur Laufzeit verändert werden. Das kann vor allem dann notwendig sein, wenn die Konfiguration nicht dem Standard entspricht.

Die Auswertung bei Sollwertrampen wurde durch den Einsatz von Bandpassfiltern und speziellen Methoden wie Wellenverlustberechnung und Differenziation der Drehzahl ermöglicht. Die sensiblere Auswertung der Stabilitäts-Kennzahl bei stationärem Betrieb wird durch die zusätzliche Bewertung der Stellgrößen erreicht.

Damit ist auch eine wesentliche Absenkung der CPU-Auslastung möglich, mit vorteilhafterweise weitgehend konstanter und vorhersehbarer Rechenzeit.

Tabelle 8

| System- Eingangsgrößen | Anzahl | Bemerkung |
|---|---|---|
| System-Variable | 19 | **Regel-, Mess- und Zustandsgrößen:** z.B. aktuelle Regelart, Soll-, Ist- und Stellwerte der einzelnen Regelarten, Bremsentyp, Drehmomentmesswerte usw. |
| Prüfstandsparameter | 11 | **Kenngrößen der Prüfstandskonfiguration:** z.B. Leerlaufdrehzahl, Zylinderanzahl, Nennleistung des Belastungsaggregates, max. Motordrehzahl, max. Drehmoment des Belastungsaggregates usw. |

(fortgesetzt)

| System- Eingangsgrößen | Anzahl | Bemerkung |
|---|---|---|
| MPE-Parameter | 14 | **RTA-Parameter, die gegebenenfalls zur Laufzeit verändert werden können:**<br>Auszuwertendes Drehmomentsignal<br>OMC_manage S-Function:<br>   Grenzen für die Erkennung von transientem Betrieb (maxN_gradient, maxMD_gradient,...)<br>   Stabilisierungszeit nach Rampen (1,5s)<br>FFTAnalyser S-Function:<br>   min. auszuwertende Frequenz (1Hz)<br>   max. auszuwertende Frequenz (60Hz)<br>   untere Grenze für krit. f-Bereich (10Hz)<br>   obere Grenze für krit. f-Bereich (22Hz)<br>   zus. Gewichtung der Ausgangsgröße (20%) |

**Patentansprüche**

1. Verfahren zur Überwachung von Leistungsprüfständen mit zumindest einem Belastungsaggregat, das mit einem Prüfling, beispielsweise einem Verbrennungsmotor, Fahrzeugantrieb oder Antriebsstrang, gekoppelt ist, umfassend die Ermittlung von mehreren, allenfalls abgeleiteten, und den aktuellen Zustand des Prüfstandes charakterisierenden Parametern und deren automatisierte Bewertung im Hinblick auf die Stabilität des Betriebs-Zustandes des Prüfstandes, **dadurch gekennzeichnet, dass** jeder Parameter normiert wird, wobei als Grundlage für die Normierung Kenngrößen der aktuellen Prüfstands-Konfiguration aus Prüfling und Belastungsaggregat herangezogen werden, dass die normierten Parameter gewichtet und zu einer einzelnen, für den aktuellen Zustand charakteristischen Kennzahl zusammengefasst werden, und dass diese Kennzahl für die Anzeige bzw. als Steuergröße für die Echtzeit-Prüfstandssteuerung zur Verfügung gestellt wird.

2. Verfahren nach Anspruch 1, **dadurch gekennzeichnet, dass** die Gewichtung der normierten Parameter abhängig vom Betriebsmodus des Prüfstandes durchgeführt wird.

3. Verfahren nach einem der Ansprüche 1 oder 2, **dadurch gekennzeichnet, dass** von erfassten Parametern des Prüfstands oder deren zeitlicher Ableitung die Standardabweichung über einen definierten Zeitraum bestimmt wird.

4. Verfahren nach einem der Ansprüche 1 bis 3, **dadurch gekennzeichnet, dass** erfasste Parameter des Prüfstands auf definierte Frequenzbereiche eingeschränkt werden.

5. Verfahren nach Anspruch 4, **dadurch gekennzeichnet, dass** nach dem Abtasten und vor der Ermittlung des jeweiligen Parameters ein Downsampling angewendet wird, wobei die resultierende Abtastung an den jeweils interessierenden Frequenzbereich angepasst ist.

6. Verfahren nach einem der Ansprüche 1 bis 5, **dadurch gekennzeichnet, dass** auf erfasste Parameter des Prüfstands eine Frequenzanalyse angewendet wird.

7. Verfahren nach einem der Ansprüche 1 bis 6, **dadurch gekennzeichnet, dass** aus erfassten Parametern des Prüfstandes eine Kennzahl über die in der Verbindungswelle umgesetzten Leistung ermittelt wird.

8. Verfahren nach einem der Ansprüche 1 bis 7, **dadurch gekennzeichnet, dass** im Leerlaufmodus bzw. bei Vorgabe eines Drehmomentes des Belastungsaggregates ein Drehmomentsignal aufgenommen und ein charakteristischer Parameter aus einer Frequenzanalyse gewonnen wird.

9. Verfahren nach einem der Ansprüche 1 bis 8, **dadurch gekennzeichnet, dass** bei Vorgabe einer Drehzahl des Belastungsaggregates ein Drehmomentsignal aufgenommen und ein charakteristischer Parameter durch Bestimmung der Standardabweichung gewonnen wird.

**10.** Verfahren nach einem der Ansprüche 1 bis 9, **dadurch gekennzeichnet, dass** im Leerlaufmodus bzw. bei Vorgabe eines Drehmomentes des Belastungsaggregates die Drehzahl des Prüflings aufgenommen und ein charakteristischer Parameter durch Bestimmung der Standardabweichung gewonnen wird.

**11.** Verfahren nach einem der Ansprüche 1 bis 10, **dadurch gekennzeichnet, dass** im Leerlauf oder bei Vorgabe eines Drehmomentes des Belastungsaggregates in stationären Arbeitspunkten die Drehzahl des Belastungsaggregates aufgenommen und ein charakteristischer Parameter durch Bestimmung der Standardabweichung gewonnen wird.

**12.** Verfahren nach einem der Ansprüche 1 bis 11, **dadurch gekennzeichnet, dass** bei Vorgabe einer Drehzahl des Belastungsaggregates ein charakteristischer Parameter aus einer Frequenzanalyse dieser Drehzahl gewonnen wird.

**13.** Verfahren nach einem der Ansprüche 1 bis 12, **dadurch gekennzeichnet, dass** in allen stationären Arbeitspunkten die Stellgrößen für das Belastungsaggregat und/oder den Prüfling überwacht und ein charakteristischer Parameter durch Bestimmung der Standardabweichung gewonnen wird.

**14.** Verfahren nach einem der Ansprüche 8 oder 9, **dadurch gekennzeichnet, dass** zur Normierung des Drehmoment-Analyseergebnisses eine Drehmoment - Kenngröße des Belastungsaggregates verwendet wird.

**15.** Verfahren nach einem der Ansprüche 11 oder 12, **dadurch gekennzeichnet, dass** zur Normierung des Drehzahl-Analyseergebnisses des Belastungsaggregates eine Drehzahl - Kenngröße des Belastungsaggregates verwendet wird.

**16.** Verfahren nach Anspruch 10, **dadurch gekennzeichnet, dass** zur Normierung des Analyseergebnisses der Drehzahl des Prüflings eine Drehzahl - Kenngröße des Prüflings verwendet wird.

**17.** Verfahren nach Anspruch 13, **dadurch gekennzeichnet, dass** zur Normierung des Stellgrößen-Analyseergebnisses des Belastungsaggregates eine Kenngröße des Belastungsaggregates verwendet wird.

**18.** Verfahren nach einem der Ansprüche 1 bis 17, **dadurch gekennzeichnet, dass** die Winkelbeschleunigung des Belastungsaggregates ermittelt deren Standardabweichung als charakteristischer Parameter gewonnen wird.

**19.** Verfahren nach Anspruch 18, **dadurch gekennzeichnet, dass** zur Normierung der Standardabweichung der Winkelbeschleunigung physikalische Kenngrößen des Belastungsaggregates verwendet werden.

**20.** Verfahren nach einem der Ansprüche 1 bis 19, **dadurch gekennzeichnet, dass** die in der Verbindungswelle umgesetzte Leistung als charakteristischer Parameter gewonnen wird.

**21.** Verfahren nach Anspruch 20, **dadurch gekennzeichnet, dass** zur Normierung der in der Verbindungswelle umgesetzten Leistung eine Kenngröße des Belastungsaggregates verwendet wird.

**22.** Verfahren nach einem der Ansprüche 1 bis 21, **dadurch gekennzeichnet, dass** alle für das Verfahren benötigten Kenngrößen des Prüfstandes bzw. des Prüflings aus den bei der Parametrierung des Prüfstandes in der Prüfstandsregelung bzw. der Prüfstandsautomation vorgegeben Werten entnommen werden.

**23.** Verfahren nach einem der Ansprüche 1 bis 22, **dadurch gekennzeichnet, dass** die Kennzahl der Prüfstandsregelung zur Verfügung gestellt wird und in Abhängigkeit von dieser Kennzahl automatisch eine vordefinierte Reaktion ausgelöst wird.

**24.** Leistungsprüfstand mit zumindest einem Belastungsaggregat, das mit einem Prüfling, beispielsweise einem Verbrennungsmotor, Fahrzeugantrieb oder Antriebsstrang, koppelbar ist, mit weiters einer Prüfstandsregelung, vorzugsweise mit einer übergeordneten Prüfstandsautomatisierung, und einer Auswerteeinheit zur Ermittlung von mehreren, vorzugsweise abgeleiteten, und den aktuellen Zustand des Prüfstandes charakterisierenden Parametern und deren automatisierter Bewertung im Hinblick auf die Stabilität des Betriebs-Zustandes des Prüfstandes, **dadurch gekennzeichnet, dass** in der Prüfstandsregelung, vorzugsweise in der Prüfstandsautomatisierung, ein Modul implementiert ist, in dem nach einem Verfahren gemäß einem der Ansprüche 1 bis 23 jeder Parameter normiert, die normierten Parameter gewichtet und zu einer für den aktuellen Zustand charakteristischen Kennzahl zusammengefasst wird, welche Kennzahl für die Anzeige bzw. als Steuergröße für die Echtzeit-Prüfstandssteuerung zur Verfügung steht.

**25.** Leistungsprüfstand nach Anspruch 24, **dadurch gekennzeichnet, dass** eine Anzeige für die Kennzahl vorgesehen ist.

**Claims**

**1.** A method for monitoring performance test stands having at least one load assembly, which is coupled to a test subject, such as an internal combustion engine, vehicle drive, or drivetrain, comprising the ascertainment of multiple, possibly derived parameters which characterize the current state of the test stand and their automated evaluation in regard to the stability of the operating state of the test stand, **characterized in that** every parameter is standardized, wherein characteristics of the current test stand configuration with the test subject and the load assembly are used as the foundation for the standardization, that the standardized parameters are weighted and consolidated into a single index characteristic of the current state, and this index is provided for the display and/or as a control variable for the real-time test stand control.

**2.** The method according to Claim 1, **characterized in that** the weighting of the standardized parameters is performed as a function of the operating mode of the test stand.

**3.** The method according to one of Claims 1 or 2, **characterized in that** the standard deviation over a defined period of time is determined of detected parameters of the test stand or their chronological derivation.

**4.** The method according to one of Claims 1 through 3, **characterized in that** detected parameters of the test stand are restricted to defined frequency ranges.

**5.** The method according to Claim 4, **characterized in that**, after the sampling and before the ascertainment of the particular parameter, downsampling is applied, the resulting sampling being adapted to the particular frequency range of interest.

**6.** The method according to one of Claims 1 through 5, **characterized in that** a frequency analysis is applied to detected parameters of the test stand.

**7.** The method according to one of Claims 1 through 6, **characterized in that** an index about the performance implemented in the connection shaft is ascertained from detected parameters of the test stand.

**8.** The method according to one of Claims 1 through 7, **characterized in that**, in the idle mode and/or upon specification of a torque of the load assembly, a torque signal is recorded and a characteristic parameter is obtained from a frequency analysis.

**9.** The method according to one of Claims 1 through 8, **characterized in that**, upon specification of a speed of the load assembly, a torque signal is recorded and a characteristic parameter is obtained by determining the standard deviation.

**10.** The method according to one of Claims 1 through 9, **characterized in that**, in the idle mode and/or upon specification of a torque of the load assembly, the speed of the test subject is recorded and a characteristic parameter is obtained by determining the standard deviation.

**11.** The method according to one of Claims 1 through 10, **characterized in that**, in idle or upon specification of a torque of the load assembly in stationary operating points, the speed of the load assembly is recorded and a characteristic parameter is obtained by determining the standard deviation.

**12.** The method according to one of Claims 1 through 11, **characterized in that**, upon specification of a speed of the load assembly, a characteristic parameter is obtained from a frequency analysis of this speed.

**13.** The method according to one of Claims 1 through 12, **characterized in that**, in all stationary operating points, the manipulated variables for the load assembly and/or the test subject are monitored and a characteristic parameter is obtained by determining the standard deviation.

**14.** The method according to one of Claims 8 or 9, **characterized in that**, to standardize the torque analysis result, a torque characteristic of the load assembly is used.

15. The method according to one of Claims 11 or 12, **characterized in that**, to standardize the speed analysis result of the load assembly, a speed characteristic of the load assembly is used.

16. The method according to Claim 10, **characterized in that**, to standardize the analysis result of the speed of the test subject, a speed characteristic of the test subject is used.

17. The method according to Claim 13, **characterized in that**, to standardize the manipulated variable analysis result of the load assembly, a characteristic of the load assembly is used.

18. The method according to one of Claims 1 through 17, **characterized in that** the angular acceleration of the load assembly is ascertained and its standard deviation is obtained as a characteristic parameter.

19. The method according to Claim 18, **characterized in that**, to standardize the standard deviation of the angular acceleration, physical characteristics of the load assembly are used.

20. The method according to one of Claims 1 through 19, **characterized in that** the performance implemented in the connection shaft is obtained as a characteristic parameter.

21. The method according to Claim 20, **characterized in that**, to standardize the performance implemented in the connection shaft, a characteristic of the load assembly is used.

22. The method according to one of Claims 1 through 21, **characterized in that** all characteristics of the test stand and/or the test subject required for the method are taken from the values predetermined during the parameterization of the test stand in the test stand controller and/or the test stand automation.

23. The method according to one of Claims 1 through 22, **characterized in that** the index of the test stand controller is provided and a predefined reaction is triggered automatically as a function of this index.

24. A performance test stand having at least one load assembly, which is coupled to a test subject, such as an internal combustion engine, vehicle drive, or drivetrain, also having a test stand controller, preferably a higher-order test stand automation, and an analysis unit for ascertaining multiple, preferably derived parameters which characterize the current state of the test stand and evaluating them automatically in regard to the stability of the operating state of the test stand, **characterized in that** a module is implemented in the test stand controller, preferably in the test stand automation, in which, according to a method according to one of Claims 1 through 23, every parameter is standardized, the standardized parameters are weighted and consolidated into an index characteristic for the current state, this index being available for the display and/or as a control variable for the real-time test stand controller.

25. The performance test stand according to Claim 24, **characterized in that** a display is provided for the index.


**Revendications**

1. Procédé de surveillance de bancs dynamométriques avec au moins un groupe de charge couplé à un dispositif d'essai, par exemple un moteur à combustion, un entraînement de véhicule ou une chaîne cinématique, comprenant la détermination de plusieurs paramètres éventuellement dérivés et caractérisant l'état actuel du banc d'essai et dont l'évaluation automatisée de la stabilité de l'état de fonctionnement du banc d'essai est **caractérisée en ce que** chaque paramètre est normalisé, en prenant comme base pour la normalisation des grandeurs caractéristiques de la configuration actuelle du banc d'essai provenant du dispositif d'essai et du groupe de charge, **en ce que** les paramètres normalisés sont pondérés et agrégés en un seul indicateur caractéristique de l'état actuel, et **en ce que** cet indicateur est mis à disposition pour l'affichage ou sous forme de grandeur de commande pour le contrôle en temps réel du banc d'essai.

2. Procédé selon la revendication 1, **caractérisé en ce que** la pondération des paramètres normalisés est effectuée en fonction du mode de fonctionnement du banc d'essai.

3. Procédé selon la revendication 1 ou 2, **caractérisé en ce que** l'écart type est déterminé par les paramètres détectés du banc d'essai ou leur dérivée temporelle sur un intervalle de temps défini.

4. Procédé selon une des revendications 1 à 3, **caractérisé en ce que** les paramètres détectés du banc d'essai sont limités à des gammes de fréquences définies.

5. Procédé selon la revendication 4, **caractérisé en ce qu'**un « downsampling » est utilisé après l'échantillonnage et avant la détermination de chaque paramètre, l'échantillonnage résultant étant adapté à la gamme de fréquences d'intérêt respective.

6. Procédé selon une des revendications 1 à 5, **caractérisé en ce qu'**une analyse de fréquence est appliquée aux paramètres détectés du banc d'essai.

7. Procédé selon une des revendications 1 à 6, **caractérisé en ce qu'**un indicateur est déterminé à partir des paramètres détectés du banc d'essai au moyen de la puissance convertie dans l'arbre de transmission.

8. Procédé selon une des revendications 1 à 7, **caractérisé en ce que**, en mode repos ou lors de l'indication d'un couple du groupe de charge, un signal de couple est enregistré et un paramètre caractéristique est acquis à partir d'une analyse de fréquence.

9. Procédé selon une des revendications 1 à 8, **caractérisé en ce que**, lors de l'indication d'une vitesse du groupe de charge, un signal de couple est enregistré et un paramètre caractéristique est acquis par détermination de l'écart type.

10. Procédé selon une des revendications 1 à 9, **caractérisé en ce que**, en mode repos ou lors de l'indication d'un couple du groupe de charge, la vitesse du dispositif d'essai est enregistrée et un paramètre caractéristique est acquis par détermination de l'écart type.

11. Procédé selon une des revendications 1 à 10, **caractérisé en ce que**, en mode repos ou lors de l'indication d'un couple du groupe de charge à des points de travail fixes, la vitesse du groupe de charge est enregistrée et un paramètre caractéristique est acquis par détermination de l'écart type.

12. Procédé selon une des revendications 1 à 11, **caractérisé en ce que**, lors de l'indication d'une vitesse du groupe de charge, un paramètre caractéristique est acquis à partir d'une analyse de fréquence de cette vitesse de rotation.

13. Procédé selon une des revendications 1 à 12, **caractérisé en ce que**, à tous les points de travail fixes, les grandeurs de réglage du groupe de charge et/ou le dispositif d'essai sont surveillés et un paramètre caractéristique est acquis par détermination de l'écart type.

14. Procédé selon une des revendications 8 ou 9, **caractérisé en ce qu'**un couple - une grandeur caractéristique du groupe de charge est utilisé(e) pour la normalisation des résultats de l'analyse du couple.

15. Procédé selon une des revendications 11 ou 12, **caractérisé en ce qu'**une vitesse - une grandeur caractéristique du groupe de charge est utilisée pour la normalisation des résultats de l'analyse de la vitesse.

16. Procédé selon la revendication 10, **caractérisé en ce qu'**une vitesse - grandeur caractéristique du groupe de charge du dispositif d'essai est utilisée pour la normalisation des résultats de l'analyse de la vitesse du dispositif d'essai.

17. Procédé selon la revendication 13, **caractérisé en ce qu'**une grandeur caractéristique du groupe de charge est utilisée pour la normalisation des résultats de l'analyse de la grandeur de réglage.

18. Procédé selon une des revendications 1 à 17, **caractérisé en ce que** l'accélération angulaire du groupe de charge est déterminée, dont l'écart type est acquis sous forme de paramètre caractéristique.

19. Procédé selon la revendication 18, **caractérisé en ce que** des grandeurs caractéristiques physiques du groupe de charge sont utilisées pour la normalisation de l'écart type de l'accélération angulaire.

20. Procédé selon une des revendications 1 à 19, **caractérisé en ce que** la puissance convertie dans l'arbre de transmission est acquise sous forme de paramètre caractéristique.

**21.** Procédé selon la revendication 20, **caractérisé en ce qu'**une grandeur caractéristique du groupe de charge est utilisée pour la normalisation de la puissance convertie dans l'arbre de transmission.

**22.** Procédé selon une des revendications 1 à 21, **caractérisé en ce que** toutes les grandeurs caractéristiques du banc d'essai ou du dispositif d'essai nécessaires pour le procédé sont soustraites des valeurs prédéfinies lors du paramétrage du banc d'essai dans le réglage du banc d'essai ou l'automatisation du banc d'essai.

**23.** Procédé selon une des revendications 1 à 22, **caractérisé en ce que** l'indicateur du réglage du banc d'essai est mis à disposition et qu'une réaction prédéfinie est automatiquement déclenchée en fonction de cet indicateur.

**24.** Banc dynamométrique avec au moins un groupe de charge, qui peut être couplé à un dispositif d'essai, par exemple un moteur à combustion, une transmission de véhicule ou une chaîne cinématique, avec en outre un réglage de banc d'essai, de préférence avec une automatisation de banc d'essai supérieure, et une unité d'évaluation pour la détermination de plusieurs paramètres dérivés de préférence, et caractérisant l'état actuel du banc d'essai, et l'évaluation automatisée de la stabilité de l'état de fonctionnement du banc d'essai, **caractérisé en ce qu'**un module est implémenté dans le réglage du banc d'essai, de préférence dans l'automatisation du banc d'essai, dans lequel chaque paramètre est normalisé après un procédé selon une des revendications 1 à 23, les paramètres normalisés sont pondérés et agrégés dans un indicateur caractéristique de l'état actuel, ledit indicateur étant disponible pour l'affichage ou sous forme de grandeur de commande pour la commande en temps réel du banc d'essai.

**25.** Banc dynamométrique selon la revendication 24, **caractérisé en ce qu'**un affichage de l'indicateur est prévu.

Fig. 1

start

not monitored control mode/
entry: monitor=OFF

[cm==idle]

[cm==nm]

[cm==x]

[cm==nm]

[cm==n_Alpha]

idle/
entry: monitor=ON

x    /
entry: monitor=ON

[cm==nm]

[cm==n_Alpha]

[cm==x]

n_Alpha/
entry: monitor=ON

[cm==idle]

[cm==n_Alpha]

[cm==x]

[cm==idle]

Fig. 2

cm: idle

[mv==changed]

filt_init/
entry: state=OFF

[mv==same]

[init_time>0,8s]

idle/
entry: state=STAT

down/
entry: state=OFF

[speed<=idle_speed+20]

Fig. 3

cm: N_Alpha

[mv==changed]

filt_init/
entry: state=OFF

[init_time>0,8s]

[mv==same]

[dem_k!=0 && dem_k<=max]

transient
entry: state=RAMP

stationary/
entry: state=STAT

[dem_k==0 && still_time]

[dem_k!=0 && dem_k<=max]

[dem_k>max]

[dem_k>max]

dynamic
entry: state=OFF

[dem_k==0 && still_time]

Fig. 4

Ts

6Ts

$Cyc_{n+1}$   $Cyc_{n+2}$   $Cyc_{n+3}$   $Cyc_{n+4}$   $Cyc_{n+5}$

DynoAcc | BP-STD | TP-STD | Stand-STD | Stand-STD

$Cyc_n=250$

BP-FFT

$Cyc_n=Cyc_n+5$

$Cyc_n=0$

Fig. 5

Ts

6Ts

$Cyc_{n+1}$   $Cyc_{n+2}$

DynoAcc | BP-STD

$Cyc_n=250$

BP-FFT

$Cyc_n=Cyc_n+2$

$Cyc_n=0$

Fig. 6

Fig. 7

EP 2 128 591 B1

Fig. 8

**Prüfstands-Parameter**

Fig. 9

19

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0401847 A2
- EP 1884756 A1
- EP 0358167 A2

**In der Beschreibung aufgeführte Nicht-Patentliteratur**

- **U SHAKED et al.** Minimum Variance Control of Discrete Time Multivariable Armax Systems. *Siam Journal on Control and Optimization,* 31. Dezember 1986, vol. 24 (3), 396-411
- **ROBERT C RICE ; 19. JULI 2016 et al.** *Performance Monitoring Fundamentals: Demystifying Performance Assessment Techniques*
- **B. J. BUNKER et al.** Robust multivariable control of an engine-dynamometer system. *IEEE Transactions on Control System Technology,* 01. Marz 1997, vol. 5 (2